# EUROPEAN PATENT APPLICATION

(11) **EP 0 536 543 A1**
(43) Date of publication of application: **14.04.1993**
(21) Application number: 92115258.3
(22) Date of filing: 07.09.1992
(51) Int. Cl.: A01C 7/04

(54) **Pneumatic precision seed drill**

(30) Priority: 07.10.1991 IT PN910065
(71) Applicant: MATERMACC s.r.l., I-33078 San Vito al Tagliamento (PN) (IT)
(72) Inventor: Fiorido, Antonino Francesco, I-33078 San Vito al Tagliamento, (PN) (IT)
(74) Representative: Giugni, Valter

(57) **Abstract**

Precision-type single-seed planter with a distributor in the form of a disk (13) provided with perforations (34) and co-operating with a seed container (11, 15) and an air suction device.
The perforations (34) in the disk (13) have an elongated shape and a reduced cross-section. A selector element (14) is arranged to co-operate with the disk (13) by throttling the air suction area of the perforations.
An optimum seed separation and single-seed distribution effect is thereby achieved, regardless of the size and the shape of the seeds.

## Description

The present invention relates to precision-type, single-seed drilling planters, which are adapted to deposit seeds in the ground on a one-by-one basis, at regular intervals, ie. regularly spaced, along sowing rows.

It is well-known that these machines are used in particular for such cultivations as maize, sugar beet, soya, horticultural-type vegetables and all those horticultural and agricultural species in general that require regularly spaced sowing or deposition of either peeled or unpeeled, bare or coated seeds. Precision-type single-seed planters have a number of advantages as compared with universal-type ones. These advantages include a reduction in or even the elimination of downtimes required to subsequently carry out a thinning out of the plants, a simplification in the tilling and harvesting operations, a saving in the quantity of seeds used.

Precision-type single-seed planters can essentially be divided into two categories based on the distribution system that they are actually implementing, ie. mechanical or pneumatic.

This invention refers to precision-type single-seed planters falling into the pneumatic-type category, in which the withdrawal of the seeds from the loading container, their separation and their distribution according to a one-by-one pattern are performed by means of a rotating perforated disk having one or more sequences of concentric circular perforations, and co-operating on one side with a suction blower, which creates a negative pressure of the air through the perforations of the disk and thereby keeps the seeds adhering to the disk until the unloading zone is reached, and on the other side with a mechanical separator which enables the seeds to be selected one by one and causes excess seeds to fall back into the container.

In single-seed planters of the known type, in which the perforations of said disk are generally circular in their shape, it is rather difficult to succeed in having a single seed in correspondence of each perforation of the disk, particularly in those cases in which the seeds have no regular shape and/or have differing sizes. It is therefore general practice to try to use disks with quite large perforations so as to ensure that at least one seed is in all cases captured for distribution. However, by increasing the size of the individual perforations so as to enable even the largest seeds in the lot to be sucked in, a further problem is created in that smaller seeds have then the opportunity of passing through the perforations, or else in that many smaller seeds may get stuck in the perforations, thereby obstructing them. It is therefore quite difficult to succeed in separating the seeds so as to ensure that a single seed is actually sucked and kept adhering to each single perforation. It may further occur that the seeds that get stuck in the perforations are ultimately broken up by the separator when the latter interacts with the perforated disk.

It therefore ensues that precision-type single-seed planters have to be provided with several sets of perforated disks having perforations drilled to different diameter sizes, which must therefore be changed quite often according to the average size and shape of the seeds to be planted, so as to reduce the extent of the above described drawbacks.

Furthermore, the separators must be positioned and adjusted in such a way as to ensure that a single seed remains in each perforation. However, in the precision-type single-seed planters of the known type this is not possible when the seeds are irregular in their shape, since any adjustment enabling two smaller seeds that may possibly be inserted in a perforation to be effectively separated, would quite often prove inadequate in keeping a larger seed adhering to the disk, so that the same seed would fall back into the container and create a void in the sowing sequence. In the opposite case, any adjustment of the selector that enables large or ill-positioned seeds to be kept adhering to the disk for their correct deposition, may even enable several smaller seeds to pass through a perforation, thereby giving rise to an irregular seed deposition pattern.

The Italian patent specification no. 1.145.917 filed by F. Walter & H. Wintersteiger KG describes a precision-type single-seed drilling machine of the pneumatic type, in which the seed drilling disk is formed by two parts, ie. more precisely by a disk-type body member connected to the suction fan means and a thin disk-like plate adhering against said body member so as to cover it on its side facing the seeds. Said disk-type body member is fixed and is provided with a guide slot extending from the centre to the periphery of said body member so as to follow the ejection path of the seed. The disk-like plate is rotatable and is provided with a plurality of radial slots extending from the central portion to the periphery of the disk. This particular type of construction enables a slower speed to be implemented at which the seeds are extracted from the container, and therefore the disk to be facilitated in more effectively capturing the extracted seeds. This occurs owing to the fact that the conveying slots are arranged according to a radial pattern and start off from the central portion of the disk. However, in order to have said conveying slots adequately spaced so as to enable the seeds to adhere along a small central circumference of the disk, said slots have be provided only in a limited number. It therefore ensues that, with the distribution of a small number of seeds for each rotation of the disk, it is necessary to work at a very slow forward-moving speed on the field, otherwise there would be no effective or even acceptable sowing action, since the seeds would necessarily be subjected to an excessively high centrifugal force.

The therein described system proves quite effective in operation with seeds having a roundish shape, while it is clearly less effective when it comes to individually distribute single seeds being irregular in their shape, eg. tapered or pointed, or in their size. Furthermore, this particular arrangement appears to be rather complicate in its construction, since it practically requires a double disk body, each one of said two parts of the disk having further to be provided with a number of special slots.

It should further be stressed how, from a functional point of view, the seeds are with that particular arrangement coming into contact with both said parts of the disk and are subjected to a rolling action which, if it on the one side promotes separation of the seeds, may on the other side cause the seeds to become damaged owing to the considerable friction against the surfaces of said two parts of the disk along a considerable length of their path.

The European patent application no. 0.338.883 filed by ATELIERS RIBOULEAU describes a precision-type single-seed drilling machine of the pneumatical type, in which the distribution disk is provided with circular, equally spaced perforations drilled along one or two circular patterns near the outer edge of the disk.

The main feature of said solution is the suction device which has an inner channel with a differing cross-section branching off into two arms, of which one is provided with a shut-off member capable of isolating said channel arm from the suction device. In a particular embodiment, the distribution disk is provided with circular perforations arranged a long two circular rings, as well as a set of fins arranged in an alternate sequence with said perforations, which set the seeds in motion in the container and convey them from the release point in the suction device through to the point at which they fall into the ground.

In this particular embodiment, in the passage of the seeds from one ring of perforations to the other one there occurs a separation of the individual seeds which, within certain limits, is independent of the actual size and shape of the seeds. It is however quite apparent that the space taken up by the fins arranged in an alternate sequence with the perforations has a limiting effect on the quantity of perforations that can actually be drilled along each circular ring and, as a consequence, the number of seeds that can be distributed for each rotation of the disk.

It therefore ensues that the forward moving speed of the drilling machine in the field shall necessarily be reduced so as to esclude any excessively high rotation speed of the disk, which would negatively affect the seeds owing to the centrifugal forces generated. It will be also appreciated that such an arrangement implies quite an expensive, complicated construction.

In a further embodiment of said arrangement, which is adapted to operate in a likewise manner as the usual precision-type single-seed drilling machines of the pneumatic type, the distribution disk is not provided with any of such fins, but is associated with a selector element provided with rectilinear slits and adjustable into position with respect to the perforations of the disk, so that the sucked-in seeds are caused to impinge against the protrusions of the plate and are in this way selected. However, even such a constructional solution appears to have its drawbacks. As a matter of fact, the circular perforations in the distribution disk cannot be sized to any large diameter, in order to prevent seeds from getting stuck in them or passing unhindered through them. On the other hand, they cannot even be given too small a diameter, since suction would in such a case turn out to be inadequate to effect seed extraction from the hopper. Furthermore, the separator cannot work in a much efficient way in the case of irregularly shaped or sized seeds.

It is the purpose of the present invention to provide an improved type of pneumatically operated, precision-type, single-seed planter which is simpler in construction as compared with the currently known machines of the same category, and which is such as to ensure individual selection of single seeds in a really effective way, whichever the size and the shape of the seeds may also be within certain reasonable limits.

In particular, the advantage is in this way achieved of being able to use the same disk and the same adjustment thereof to individually sow or plant single seeds having different grain sizes. Furthermore, by adjusting the selector element correspondingly, the possibility is achieved to individually, ie. on a one-by-one basis, sow or plant a variety of seed species which is much wider than the one that can normally be handled with pneumatically operated single-seed planters of the hitherto known type.

The main features of the present invention are as detailed in the appended claims. Anyway, the invention, along with its peculiar characteristics and advantages, will be further described below by way of non-limiting example, with reference to the accompanying drawings in which:
- Figure 1 is a perspective, partially cross-sectioned view of the single-seed distributor means according to the invention;
- Figure 2 is a cross-section view along the II-II line of the single-seed distributor means of Figure 1; and
- Figure 3 is a perspective, exploded view of the distributor means of Figure 1.

The single-seed distributor means 10 according to the invention can be applied to any known type of planters (not shown) whatsoever.

The single-seed distributor means 10 is essentially formed by a seed container 11 and a box-like casing 12, with a perforated disk 13, associated with a selector element 14, arranged therebetween.

The seed container 11 is provided on its upper portion with a hopper 15 for loading the seeds, and on its lower portion with an unloading conduit 16 for depositing the seeds into the ground, as well as in a preferred way with a lid 17 that can be opened to clean the container 11, particularly when it is required to change the type of seeds to be distributed.

Said seed container 11 is further provided with projections 18, 19 that are adapted to co-operate with respective projections 181 and 191 of the casing 12 to effect the connection and the closure (by means of holes, pins and bolts) of the container 11 with the casing 12.

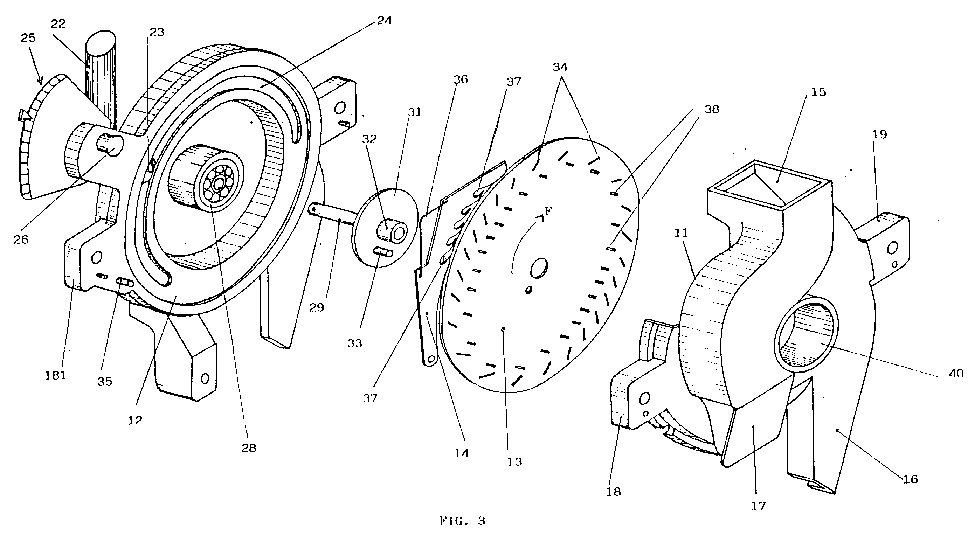

In a preferred way, the hopper 15 extends downwards into the interior of the container 11 with a wall 20, which acts an effective fending and conveying means for the seeds 21 in the same container, as shown in Figure 2.

The box-like casing 12 is connected with an air suction device (for instance, a motor-driven fan of known type, not shown in the Figure) through a suction conduit 22 which terminates in a hole 23 (Figure 3) in correspondence of a suction slit 24 that is provided along a circumferential arc in the body of the casing 12. Said slit 24 is open on the side facing the disk 13 which, when the distributor means is assembled, is enclosed between the container 11 and the casing 12.

The casing 12 further carries a hand-operated adjusting member with related indicator means 25, which is provided with an eccentric means 26, or a similar provision, so as to adjust the position of the selector element 14 as will be described hereinafter.

The casing 12 is also provided with a perforated hub 27 (Figure 2) through which passes, as supported by bearings 28, a shaft 29 that may for instance be driven through a cog-wheel 30 to rotatably drive the disk 13, to which it is connected by means of a driving disk 31, a centering dowel 32 and a driving pin 33 (Figures 2 and 3).

According to the main feature of the present invention, said disk 13 is provided with a ring of perforations 34, which are preferably arranged according to an equally spaced pattern along a circumferential circle near the outer periphery of the same disk. Said perforations 34 have an elongated shape and a reduced cross-section, so as to prevent seeds with a smaller size from passing therethrough, while at the same time ensuring the passage of a suction air flow which is sufficient to keep seeds with a larger size adhering to the perforations during the rotation of the disk 13. Said perforations 34 may in an advantageous manner be given an arrangement which is inclined with respect to the radial direction of the disk 13, as for instance shown in Figure 3.

The selector element 14, the profile of which is situated in front of the perforations 34, co-operates with that surface of the disk 13 which is facing the seed container 11. According to a particular embodiment, said profile of the selector element 14 is designed so as to divide the perforations into two portions, ie. a seed suction portion situated in an area which is closer to the centre of the disk 13, and a single-seed selection portion that is closer to the periphery of the same disk. This enables the effectiveness of the action of the selector element to be considerably enhanced as far as both the separation of small sized seeds, without them passing through the perforation, and the retention of larger sized seeds, which are exposed to a larger flow of suction air, are concerned.

If the point is to achieve a basically low-cost planter, such as only adapted to handle seeds of the same kind, said selector element 14 may be of a fixed type. Even in this case, with the disk 13 provided with perforations 34 according to the invention, a significant improvement is achieved in the operation and the performance capabilities of the planter, under a more reliable and accurate distribution of the single seeds. In a preferred way, however, said selector element 14 as described in this patent specification is mounted so as to pivot about a pin 35 fixed inside the casing 12, and is retained in a position adhering against the eccentric means 26 by means of a spring fork 36.

By actuating the regulator member 25, the eccentric means 26 is shifted and, as a consequence, the selector element 14 is moved into a suitable position with respect to the surface of the disk 13, as well as with respect to the perforations 34, according to the type of seeds that have to be distributed.

Said shifting and adjustment of the selector element may of course be performed also by means of different mechanical elements, such as screws, levers or sliders, while in all cases achieving a similar result and effect.

According to a further feature of the present invention, the selector element 14 is provided with a number of slots 37 that are cut along the region of its profile which is situated in front of the ring of perforations 34 around the disk 13, said slots 37 being further co-operating with said perforations 34.

Said slots 37 are arranged with their open ends following an inclined pattern in the direction of rotation of the disk 13 and are very deep in their extension so as to ensure, in co-operation with said selector element 14, the suction and the selection of the seeds, with the distribution of single seeds and the falling of multiple or excess seeds back into the container 11.

Each one of said slots 37 further terminates with an end portion having a sharp profile, so as to create a ridge that promotes leapfrogging into the next slot by the seed which is kept sucked in the perforation in a privileged position, regardless within certain reasonable limits of the shape and the size of the seed, and that also causes multiple or excess seeds to be released and come off.

It may be useful, although not strictly necessary, to provide the inner surface of the disk 13 with a circle of radially arranged lugs 38 or the like, so as to promote an agitation of the seeds in the container 11 during the rotation of the disk 13.

In the operation of the planter, after the seeds are filled into the container 11, the disk 13 is set rotating (in the direction as indicated by the arrow F in Figure 3) and the air suction device is started.

The seeds 21, owing to the air suction through the conduit 22, the hole 23, the slit 24 and the perforations 34, are caused to adhere to the disk 13 and are lifted off the same disk, and get progressively separated, as they proceed in front of the slots 37 of the selector element 14.

Through an appropriate selection of the position of said selector element 14 it is possible to achieve that, in correspondence of the last slot 37 in the direction of rotation of the disk 13, there will be only one seed for each perforation 34 that keeps adhering to the disk 13 and that will then come off the same disk when it reaches the unloading area in correspondence of the unloading conduit 16, where the seed is no longer subjected to the air suction effect, since the suction slit 24 is in fact terminated.

It will of course be appreciated that the above described arrangement may be the subject of any modification or integration considered to be appropriate, without departing from the scopes of the present invention. For instance, the perforations may be given an elongated shape, which however deviates from the herein shown shape, eg. rhomboidal. Furthermore, a hollow sealing ring 39 or similar gasketing means of plastic material may be appropriately provided between the casing 12 and the disk 13 so as to ensure correct positioning of said two elements and an effective sealing effect between them (Figure 2).

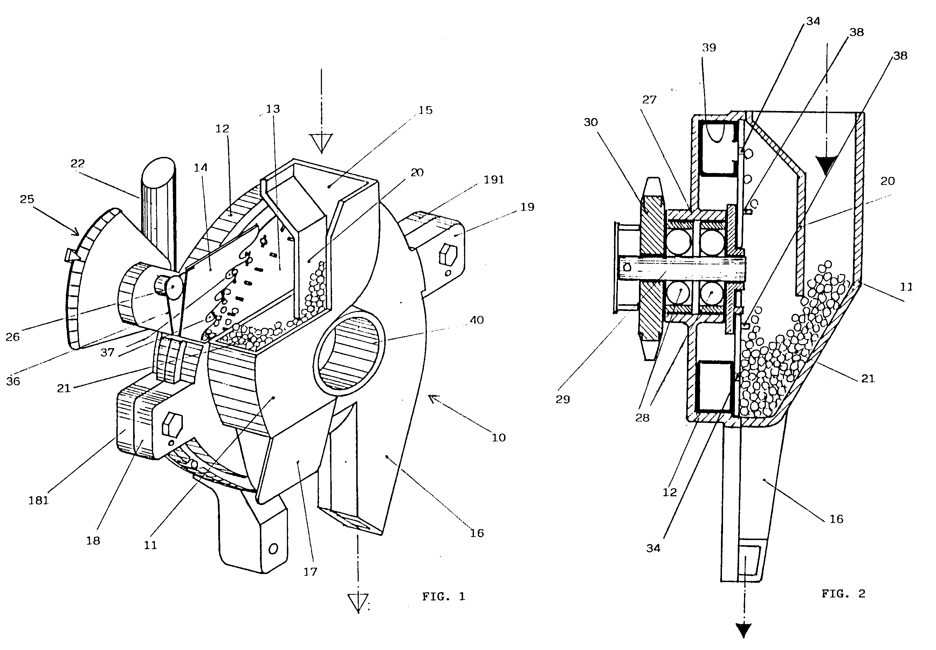

Furthermore, the seed container 11 may be provided with a central opening 40 (Figures 1 and 2) to possibly introduce the support and driving elements for the disk 13 from the opposite side of the device, as opposed to the arrangement shown in the accompanying drawing.

## Claims

1. Precision-type single-seed pneumatic planter, provided with distributor means for single seeds comprising a disk (13) that is provided with perforations (34) arranged circumferentially in the vicinity of its outer edge and is rotatably operable, said disk (13) being adapted to co-operate on one side with a seed container (11, 15) and on the other side with a casing (12) provided with an opening (24) connected with an air suction device to extract the seeds from said seed container (11, 15) through the action of a negative air pressure created through said perforations (34), and a selector element (14) provided in correspondence of said perforations (34) on the seed facing side of said disk (13) to separate single seeds, **characterized in that** said perforations (34) of the disk (13) have an elongated shape and a reduced cross-section so as to prevent seeds of a smaller size from passing therethrough and to enable at the same time such a suction air flow to pass therethrough as necessary to keep seeds with a larger size adhering on to the disk (13), said selector element (14) being arranged so as to have its profile co-operating with said perforations by throttling the suction area thereof so as to select the single seeds.

2. Precision-type single-seed pneumatic planter according to claim 1, characterized in that said selector element (14) is arranged so that its profile co-operates with said perforations (34) by dividing them up into two portions, of which one is a seed suction portion situatedin an area that is closer to the centre of the disk (13) and the other one is a single-seed selection portion situated in an area that is closer to the periphery of the same disk (13).

3. Precision-type single-seed pneumatic planter according to claim 1 or 2, in which the perforations (34) of the disk (13) are arranged at equally spaced intervals along a circle running circumferentially near the outer periphery of said disk (13), characterized in that said perforations (34) are arranged according to a pattern that is inclined with respect to the radial direction of the disk (13).

4. Precision-type single-seed pneumatic planter according to any preceding claims, characterized in that said selector element (14) is pivotally attached to said casing (12) and is connected through a spring fork (36) and a cam (26) with a hand-operated regulator means (25) adapted to adjust the position of said selector element (14) according to the type of seeds to be distributed.

5. Precision-type single-seed pneumatic planter according to any preceding claims, characterized in that said selector element (14) is provided with appropriately deep slots (37) having their edges protruding and terminating with a sharp contour so as to create an air suction effect that causes the seeds to adhere, as well as to cause single seeds to get over the ridge.

6. Precision-type single-seed pneumatic planter according to any preceding claims, characterized in that said casing (12) is provided with an annular slit (24) extending along an arc of circumference in front of the circumferential circle of perforations (34) of the disk (13), said slit (24) being in connection through a hole (23) with a conduit (22) connected to the air suction device.

7. Precision-type single-seed pneumatic planter according to any preceding claims, characterized in that said disk (13) is rotatably driven through a shaft (29), which is supported in the casing (12), a driving disk (31), which is attached to one end of said shaft (29), and an eccentric pin (33) fixed on said driving disk (31).
